(19) Europäisches Patentamt
European Patent Office
Office européen des brevets

(11) Veröffentlichungsnummer: **0 126 261**
**B1**

# (12) EUROPÄISCHE PATENTSCHRIFT

(45) Veröffentlichungstag der Patentschrift: **28.01.87**

(21) Anmeldenummer: **84103925.8**

(22) Anmeldetag: **09.04.84**

(51) Int. Cl.⁴: **G 02 C 7/04**, B 29 D 11/00, C 08 L 1/14 // (C08L1/14, 67:00, 69:00)

(54) **Verwendung von Polymerlegierungen auf Basis von Celluloseestern in der Augen-Kontaktoptik und aus den Polymerlegierungen hergestellte Kontaktlinsen und -schalen.**

(30) Priorität: **19.04.83 DE 3314188**

(43) Veröffentlichungstag der Anmeldung: **28.11.84 Patentblatt 84/48**

(45) Bekanntmachung des Hinweises auf die Patenterteilung: **28.01.87 Patentblatt 87/5**

(84) Benannte Vertragsstaaten: **AT BE CH DE FR GB IT LI NL SE**

(56) Entgegenhaltungen:
**EP - A - 0 013 366**
**GB - A - 706 771**
**US - A - 2 423 823**

(73) Patentinhaber: **BAYER AG, Konzernverwaltung RP Patentabteilung, D-5090 Leverkusen 1 Bayerwerk (DE)**

(72) Erfinder: **Wingler, Frank, Dr., Walter-Flex-Strasse 17, D-5090 Leverkusen (DE)**
Erfinder: **Waniczek, Helmut, Dr., Wolfskaul 2, D-5000 Köln 80 (DE)**
Erfinder: **Geyer, Otto-Christian, Bahnhofstrasse 12, D-6330 Wetzlar (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Augen-Kontaktlinsen und -Kontaktschalen aus thermoplastischen Legierungen von Celluloseestern aliphatischer Carbonsäuren und höhermolekularen, in der Polymerkette Ester- und/oder Carbonatgruppen aufweisenden aliphatischen Verbindungen, wobei die Legierungen im wesentlichen frei an niedermolekularen Weichmachern sind. Die Erfindung betrifft weiterhin die Verwendung solcher Polymerlegierungen zur Herstellung von lichtbrechenden, halbharten, nur geringe Mengen an Wasser aufnehmenden Materialien für die Kontaktoptik.

In der Kontakt-Augenoptik werden bereits eine Reihe von verschiedenen Kunststoffen eingesetzt. Die Materialien sitzen unmittelbar auf der Hornhaut und beeinflussen daher wesentlich deren Stoffwechselvorgänge sowie den Sauerstoffhaushalt. Infolge des direkten Kontakts können ausserdem Reizeinwirkungen, z.B. durch Verunreinigungen und migrierende Bestandteile des Kunststoffs, auf das Auge erfolgen.

Kontaktlinsen werden im allgemeinen in drei Haupttypen eingeteilt, nämlich in harte, halbharte und hydrophile weiche Linsen. Linsen der ersten Art sind schon seit vielen Jahren bekannt und werden üblicherweise aus Polymethylmethacrylat hergestellt, das geschnitten und poliert werden kann, so dass die Linsen gute optische Eigenschaften aufweisen. Harte Polymethylmethacrylat-Linsen haben jedoch in der Praxis den Nachteil, dass sie die Hornhaut und das Innere des Augenlides mechanisch reizen. Wenn ein Patient harte Linsen tragen soll, dann erfordert dies daher eine erhebliche Eingewöhnungszeit, während der der Patient die Linsen in allmählich zunehmenden Zeiträumen trägt, bis zu einem Maximum von etwa achtstündiger kontinuierlicher Tragedauer.

Aufgrund dieses Mangels der harten Linsen werden sie nur von einem geringen Prozentsatz der Kontaktlinsenträger angewendet.

In den letzten Jahren sind weiche Kontaktlinsen in die Augen-Kontaktoptik eingeführt worden, die aus Hydrogelen von hydrophilen Polymeren bestehen. Durch sie konnte das Problem der Augenreizung zum grossen Teil überwunden werden, so dass die Patienten sich nunmehr an das Tragen von Kontaktlinsen viel rascher gewöhnten. Die bisher verwendeten weichen, hydrophilen Linsenmaterialien auf Basis von Hydroxyethylmethacrylat und/oder Vinylpyrrolidon besitzen aufgrund ihrer Hydrophilie zwar anfänglich einen grösseren Tragekomfort als harte Linsen, haben aber den enormen Nachteil, dass sich in ihnen Stoffwechselprodukte ablagern, und ausserdem Bakterien, Sporen oder Pilze eindringen, die eine Infektion des Auges hervorrufen können.

Es bestand daher ein Bedarf nach neuen lichtbrechenden Materialien für Augen-Kontaktlinsen und -schalen, die weder den Nachteil des mangelnden Tragekomforts der harten Polymethylmethacrylat (PMMA)-Linse noch den Nachteil der leichten Infizierbarkeit der weichen Hydrogele auf Basis von Hydroxyethylmethacrylat (HEMA)/Vinylpyrrolidon besitzen. Vorteilhaft wäre die Verwendung von halbharten, nur geringe Mengen an Wasser aufnehmenden Materialien, die keine Reizerscheinungen verursachen, chemisch indifferent sind, einen hohen Tragekomfort besitzen, keine Bakterien, Pilze oder Stoffwechselprodukte aufnehmen, keine Weichmacher etc. abgeben und die gleichzeitig nur geringe Lichtstreuung besitzen.

Als Basismaterial wird bei den derzeit in der Praxis verwendeten halbharten Linsen Celluloseacetobutyrat (CAB) eingesetzt. Die Verträglichkeit von Linsen aus CAB ist im allgemeinen besser als jene von Polymethylmethacrylat-Hartlinsen. Grund hierfür ist die bessere Benetzbarkeit, geringere mechanische Belastung und höhere Wärmeleitfähigkeit der CAB-Linsen. Unter einer harten bis halbharten Linse wird ausserdem der Transport der Tränenflüssigkeit nicht so stark gehemmt wie bei einer fest aufliegenden weichen Linse. Von Nachteil ist bei den CAB-Linsen allerdings, dass die Materialien oft Weichmacher und Verarbeitungshilfsmittel enthalten, denn CAB ist ohne Zusätze thermoplastisch nicht zu verarbeiten.

In Polymerlegierungen aus Celluloseestern mit Polyethylen-co-vinylacetat wurden halbharte bis weiche Materialien gefunden, die weitgehend die genannten Anforderungen erfüllen (siehe hierzu DOS 2 807 663, DOS 2 856 891 und EP 0 013 366). Es hat sich aber gezeigt, dass sich die Radien von Kontaktlinsen oder Kontaktschalen aus solchen Materialien nach längerem Tragen verändern können; darüber hinaus besitzen solche Materialien einen, wenn auch geringen Reststreulichtanteil, der auf eine nicht vollständig homogene Verteilung der Legierungsbestandteile zurückzuführen ist.

Aufgabe der vorliegenden Erfindung war es daher, thermoplastische Polymerlegierungen auf Basis von Celluloseestern aufzufinden, die den anerkannt guten Tragekonfort und die hohe Indifferenz gegenüber Bakterien, Pilzen, Stoffwechselprodukten etc. der Celluloseester/Polyethylen-co-vinylacetat-Polymerlegierungen besitzen, jedoch einen geringeren Reststreulichtanteil aufweisen und Kontaktlinsen und Kontaktschalen mit verbesserter Radienstabilität geben. In von niedermolekularen Weichmachern freien thermoplastischen Polymerlegierungen aus Celluloseestern und bestimmten höhermolekularen aliphatischen Verbindungen wurden solche geeignete Materialien gefunden.

Gegenstand der vorliegenden Erfindung sind somit Kontaktlinsen und Kontaktschalen aus einer im wesentlichen weichmacherfreien Polymerlegierung auf Basis eines oder mehrerer Celluloseester von einer oder mehreren aliphatischen Carbonsäuren, welche dadurch gekennzeichnet sind, dass die Polymerlegierung aus

A) 97 bis 70 Gew.-%, bevorzugt 95 bis 85 Gew.-%, Celluloseester und

B) 3 bis 30 Gew.-%, bevorzugt 5 bis 15 Gew.-%, einer in der Polymerkette Ester- und/oder Carbonatgruppen aufweisenden aliphatischen Verbindung mit einer Molmasse von 2000 bis 300 000, bevorzugt 4000 bis 200 000, besonders bevorzugt 5000 bis 100 000,

besteht und weniger als 2 Gew.-%, bevorzugt weniger als 1 Gew.-%, besonders bevorzugt weniger als 0,5 Gew.-%, an Verbindungen mit einer Molmasse unter 500, bevorzugt unter 1000, enthält.

Die erfindungsgemäss einzusetzenden, halbharten bis weichen Polymerlegierungen sind frei von üblichen Weichmachern und Verarbeitungsstabilisatoren, ohne die normalerweise Celluloseester aliphatischer Carbonsäuren ohne Zersetzung oder Verfärbung nicht thermoplastisch verarbeitbar sind. Sie besitzen eine hohe Lichtdurchlässigkeit mit nur sehr geringem Streulichtanteil. Es ist überraschend, dass die erfindungsgemäss einzusetzenden Mischungen aus zwei Polymeren mit unterschiedlichem Brechungsindex verträglich sind und keine Lichtstreuung zeigen. Normalerweise treten bei derartigen Polymermischungen Unverträglichkeiten und somit Trübungen auf.

Geeignete Celluloseester zur Herstellung der erfindungsgemäss zu verwendenden lichtbrechenden Polymerlegierungen sind Celluloseester aliphatischer Carbonsäuren mit 1 bis 5 C-Atomen, vorzugsweise Celluloseacetat, -acetopropionat und -acetobutyrat.

Verfahren zur Herstellung von organischen Celluloseestern sind seit langem bekannt und werden beispielsweise in Ullmanns Encyclopädie der technischen Chemie (Verlag Urban und Schwarzenberg, München-Berlin, 1963) im 5. Band auf Seite 182 bis 201 beschrieben.

Geeignete Celluloseacetobutyrate enthalten z.B.
30 bis 50 Gew.-% Buttersäure,
10 bis 26 Gew.-% Essigsäure und
0,7 bis 1,95 Gew.-% Hydroxylgruppen.

Bevorzugt ist die Verwendung von Celluloseacetobutyraten mit folgender Zusammensetzung:
35 bis 46 Gew.-% Buttersäure,
15 bis 21 Gew.-% Essigsäure und
0,8 bis 1,7 Gew.-% Hydroxylgruppen.

Geeignete Celluloseacetopropionate enthalten z.B.
30 bis 63,5 Gew.-% Propionsäure,
1 bis 12 Gew.-% Essigsäure und
1,2 bis 1,95 Gew.-% Hydroxylgruppen.

Bevorzugt werden erfindungsgemäss Celluloseacetopropionate folgender Zusammensetzung verwendet:
40 bis 60 Gew.-% Propionsäure,
2 bis 8 Gew.-% Essigsäure und
1,5 bis 1,8 Gew.-% Hydroxylgruppen.

Die relativen Viskositäten ($\eta_{rel}$) von 2%igen Lösungen der verwendeten aliphatischen Celluloseester in Aceton liegen bei 25°C vorzugsweise zwischen 3,5 und 5,0, besonders bevorzugt zwischen 4,0 und 4,5.

Als zweite Komponente der erfindungsgemäss zu verwendenden Polymerlegierungen kommen nicht mit Wasser extrahierbare höhermolekulare, gegebenenfalls verzweigte und gegebenenfalls endständig 2 bis 8, vorzugsweise 2 oder 3, besonders bevorzugt 2, Hydroxylgruppen aufweisende aliphatische Verbindungen in Betracht, die im allgemeinen Carbonat- und/oder Estergruppen sowie gegebenenfalls Ethergruppen enthalten und ein mittleres Molekulargewicht (Zahlenmittel) von 2000 bis 300 000 besitzen. Es sind dies vorzugsweise Polyester, Polyetherester, Polyestercarbonate, Polyethercarbonate und Polyesterethercarbonate.

Die in Frage kommenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer und/oder cycloaliphatischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Hexahydrophthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure. Als mehrwertige Alkohole kommen z.B. Ethylenglykol, Propylenglykol-(1,2), und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Die Polyester haben vorzugsweise ein Molekulargewicht von 2000 bis 15 000, besonders bevorzugt 4000 bis 12 000.

Als Einbaukomponente für erfindungsgemäss zu verwendende Polyesterether und Polyethercarbonate kommen gegebenenfalls verzweigte Polyether der an sich bekannten Art in Frage, welche z.B. durch Polymerisation von Epoxiden wie Ethylenoxid, Propylenoxid, Butylenoxid, Tetrahydrofuran oder Epichlorhydrin mit sich selbst, z.B. in Gegenwart von Lewis-Katalysatoren, wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, Ethanolamin oder Ethylendiamin hergestellt werden können. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Auch Hydroxylgruppen aufweisende Polycarbonate kommen erfindungsgemäss in Betracht, die z.B.

durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen oder deren Mischungen mit Diaminen oder Polyaminen gewonnenen, vorwiegend linearen Kondensate.

Zu den erfindungsgemäss bevorzugt eingesetzten höhermolekularen Verbindungen zählen Kondensationsprodukte, welche durch Veretherung von gegebenenfalls verschiedenen Polyhydroxylverbindungen mittleren Molekulargewichts der oben beschriebenen Art (z.B. einer Mischung aus einem Polyester- und einem Polyetherpolyol) in Gegenwart einer starken Säure erhalten werden (siehe z.B. DE-OS 2 210 839, DE-OS 2 544 195 und US-PS 3 849 515). In Verbindungen dieser Art sind einzelne Segmente mittleren Molekulargewichts über Etherbrücken miteinander verbunden.

Besonders bevorzugt werden als zweite Komponente der erfindungsgemäss zu verwendenden Polymerlegierungen aliphatische Polyester- und/oder Polyethercarbonate eingesetzt, welche wiederkehrende Struktureinheiten der nachstehenden allgemeinen Formel (I) aufweisen:

$$-\left[\left(X\text{-}O\text{-}\underset{\underset{O}{\|}}{C}\text{-}O\right)_l\left(X^1\text{-}O\text{-}\underset{\underset{O}{\|}}{C}\text{-}O\right)_n\right]_m- \qquad (I)$$

wobei

$X^1$ gleiche oder verschiedene aliphatische Polyesterreste mit einem Molekulargewicht von 200 bis 6000, vorzugsweise von 750 bis 3500, besonders bevorzugt von 1000 bis 2500, bedeutet,

X die Bedeutung von $X^1$ hat oder für gleiche oder verschiedene aliphatische Polyetherreste mit einem Molekulargewicht von 200 bis 20 000, vorzugsweise von 700 bis 10 000, besonders bevorzugt von 1000 bis 3000, steht,

$n = 0$ oder eine ganze Zahl von 1 bis 20 ist,

l eine ganze Zahl von 1 bis 20 darstellt und

m eine ganze Zahl, vorzugsweise = 20 bedeutet,

wobei die Grenzviskosität $[\eta]$ in Tetrahydrofuran vorzugsweise 0,5 - 2,5 $\frac{dl}{g}$, besonders bevorzugt 0,8-1,5, ist.

Zur Herstellung besonders radienstabiler, transparenter Linsen eignen sich Verbindungen der Formel (I), bei denen X den Rest eines aliphatischen Polyethers mit einem Molekulargewicht von 200 bis 6000 bedeutet und n und l für ganze Zahlen von 10 bis 20 stehen.

Um optimale Lichtdurchlässigkeit des Materials zu gewährleisten, sollte bevorzugt im Falle von Celluloseacetat der Gehalt der Verbindung der Formel (I) an Polyestersegmenten < 50 Gew.-% sein; bei Celluloseacetobutyrat können hingegen sowohl X als auch $X^1$ einen Polyesterrest darstellen.

Als Polyester- bzw. Polyetherreste X und $X^1$ sind im Prinzip alle auf Basis der oben beschriebenen Polyester und Polyether geeignet.

Als mehrwertige aliphatische Alkohole für die dem Rest $X^1$ zugrundeliegenden Polyester kommen vorzugsweise, gegebenenfalls im Gemisch miteinander, z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol, 1,4-Bis-(hydroxymethylcyclohexan), 2-Methyl-1,3-propandiol, Di-, Tri-, Tetra- und Polyethylenglykol, Di-, Tri-, Tetra- und Polypropylenglykol und Dibutylenglykol in Frage. Bevorzugt sind Gemische aus zweien dieser Alkohole, wobei besonders bevorzugt einer der Alkohole verzweigte Struktur aufweist. Beispiele hierfür sind Ethylenglykol/Butandiol oder Hexandiol/Neopentylglykol.

Als mehrwertige aliphatische Carbonsäuren für die dem Rest $X^1$ zugrundeliegenden Polyester kommen bevorzugt zweiwertige aliphatische Carbonsäuren wie z.B. Kohlensäure, Oxalsäure, Malonsäure, Bernsteinsäure, Adipinsäure, Korksäure, Azelainsäure, Sebazinsäure, Hexahydrophthalsäure, Glutarsäure oder deren Gemische in Frage. Anstelle der freien Carbonsäuren können auch deren Anhydride oder Ester mit niederen Alkoholen eingesetzt werden. Bevorzugt sind Adipinsäure-Polyester.

Als Lactone für die dem Rest $X^1$ zugrundeliegenden Polyester kommen z.B. γ-Butyrolacton, δ-Valerolacton, ε-Caprolacton, 7-Hydroxyhexansäurelacton, oder 8-Hydroxyoctansäurelacton in Frage, die in an sich bekannter Weise zu Polyestern polyaddiert werden können.

Als Hydroxycarbonsäuren für die dem Rest $X^1$ zugrundeliegenden Polyester kommen z.B. β-Hydroxypropionsäure, γ-Hydroxybuttersäure, δ-Hydroxyvaleriansäure, ε-Hydroxycapronsäure, 7-Hydroxyhexansäure oder 4-Hydroxy-cyclohexancarbonsäure in Frage, die in an sich bekannter Weise zu Polyestern kondensiert werden können.

Als Polyetherreste X eignen sich vorzugsweise solche der allgemeinen Formel (II)

$$-\left(\underset{\underset{R^1}{|}}{CH}\right)_a-\left[O\text{-}\left(\underset{\underset{R^1}{|}}{CH}\right)_a\right]_b- \qquad (II)$$

in der die Reste

$R^1$ jeweils gleich oder verschieden sind und unabhängig voneinander H oder $C_1$-$C_4$-Alkylreste, vorzugsweise H oder $CH_3$, bedeuten,

a eine ganze Zahl von 2 bis 10, vorzugsweise 2 oder 4, darstellt und

b eine ganze Zahl von 2 bis 350, insbesondere von 3 bis 250, bedeutet.

Beispiele dafür sind Poly-(ethylenoxid)-glykole, Poly-(1,2-propylenoxid)-glykole, Poly-(1,3-propylenoxid)-glykole, Poly-(1,2-butylenoxid)-glykole, Poly-(tetrahydrofuran)-glykole, die entsprechenden Poly-(pentylenoxid)-glykole, Poly-(hexamethylenoxid)-glykole, Poly-(heptamethylenoxid)-glykole, Poly-(octamethylenoxid)-glykole, Poly-(nonamethy-

lenoxid)-glykole und die Copolymeren oder Blockmischpolymeren aus beispielsweise Ethylenoxid und Propylenoxid. Bevorzugte Polyetherreste X sind solche auf Basis von Ethylenoxid und/oder Propylenoxid.

Die Carbonatgruppen enthaltenden Verbindungen der Strukturformel (I) werden hergestellt durch Umsetzung der beschriebenen CH-Endgruppenhaltigen Polyester und Polyether mit Kohlensäure-bis-arylestern der Formel (III)

Ar-O-C-O-Ar (III)
‖
O

worin

Ar ein substituierter oder unsubstituierter Arylrest mit 6 bis 18 C-Atomen ist, wobei als Substituenten insbesondere $C_1$-$C_4$-Alkyle, sowie Nitro- oder Halogengruppen in Frage kommen, oder mit Bis-arylcarbonaten der Formel (IV)

Ar-O-C-O-Y-O-C-Ar (IV)
‖ ‖
O O

worin

Y die Bedeutung von X und $X^1$ in Formel (I) oder von einem Carbonatgruppen enthaltenden Polyester oder Polyether mit der wiederkehrenden Struktureinheit (I) hat.

Die Umsetzung wird normalerweise bei Temperaturen von 110 bis 200°C in Gegenwart von Umesterungskatalysatoren wie beispielsweise Alkali- oder Erdalkaliphenolaten, Alkali- oder Erdalkalialkoholaten, tertiären Aminen wie beispielsweise Triethylendiamin, Morpholin, Pyrrolidon, Pyridin, Triethylamin oder Metallverbindungen wie Antimontrioxid, Zinkchlorid, Titantetrachlorid und Titansäuretetrabutylester durch geführt, wobei der Katalysator vorzugsweise in Mengen zwischen 20 ppm und 200 ppm, bezogen auf das Gesamtgewicht der Reaktionskomponenten, eingesetzt wird.

Derartige Umsetzungsprodukte sind bekannt und beispielsweise in DOS 2 732 718 oder in DOS 2 712 435 und DOS 2 651 639 beschrieben.

Die Grenzviskosität [$\eta$] wird in Tetrahydrofuran bei 25°C gemessen und ist in dl/g angegeben (Definition siehe z.B. H.G. Elias «Makromoleküle», Hüthig & Wepf-Verlag, Basel, Seite 265).

Die erfindungsgemäss zu verwendenden Polymerlegierungen können hergestellt werden, indem die Celluloseester oder Cellulosemischester mit den höhermolekularen aliphatischen Verbindungen gemischt werden. Anschliessend kann das Gemisch bei Temperaturen bis 200°C auf Walzwerken homogenisiert, als Walzfell abgezogen und zur Weiterverarbeitung zerkleinert werden. Man kann auch in Knetern mischen und das Produkt als Strang oder als beliebig geformte Masse austragen.

Eine besondere Ausführungsform ist das Legieren und Homogenisieren der Mischungskomponenten auf Ein- oder Mehrwellenmischextrudern mit anschliessender Granuliervorrichtung. Dabei ist zu beachten, dass die Extruderwellen so gestaltet sind, dass man gute mechanische Durchmischung erreicht. Der starke weichmachende Effekt der höhermolekularen aliphatischen Verbindungen bewirkt auch, dass die erfindungsgemäss zu verwendenden Legierungen bei verhältnismässig niedrigen Temperaturen (140 bis 180°C) hergestellt werden können, wodurch man keine verfärbten Produkte erhält.

Die erfindungsgemäss zu verwendenden Polymerlegierungen können auch durch Lösen der Mischungskomponenten in geeigneten Lösungsmitteln oder Lösungsmittelgemischen und anschliessendes Verdampfen der Lösungsmittel hergestellt werden. Das Verdampfen des Lösungsmittels kann entweder durch Ausgiessen eines Filmes und Abdampfen der flüchtigen Lösungsmittel bei Normaldruck oder im Vakuum bei Temperaturen von 0 bis 220°C oder durch Eindampfen mittels Entgasungsextrudern erfolgen.

Als geeignete Lösungsmittel seien beispielhaft genannt: Ketone wie Aceton, Methylethylketon, Cyclohexanon oder Diethylketon, Ester wie Essigsäuremethylester, Essigsäureethylester oder -butylester oder Ameisensäuremethylester, Ether wie Diethylether, Methyl-, Ethyl-, Propyl- oder Butylether des Ethylenglykols oder Diethylenglykols oder Tetrahydrofuran, Amide wie Dimethylformamid oder Diethylformamid, chlorierte Kohlenwasserstoffe wie Dichlormethan, Trichlormethan, Tetrachlormethan, Dichlorethan oder Dichlorethylen oder substituierte oder unsubstituierte aromatische Lösungsmittel wie Benzol, Toluol, Xylol, Chlorbenzol, Dichlorbenzol, Nitrobenzol, Anisol, Phenol oder Kresol.

Die erfindungsgemäss zu verwendenden Polymerlegierungen können nach den normalen Methoden der thermoplastischen Kunststoffverarbeitung verarbeitet werden, beispielsweise durch Spritzguss, Extrusion, Pressen zwischen Stempeln oder Hohlblasen zu Folien.

Die Polymerlegierungen können direkt zu Linsenkörpern verspritzt oder verpresst werden.

Die Verarbeitung zu Augen-Kontaktlinsen- oder -Kontaktschalen erfolgt dabei nach herkömmlichen Verfahren durch Spritzguss in Formen, durch Schleuderguss in Formen, durch Stanzen oder Prägen aus Folien, oder durch Pressen zwischen Quarzstempeln. Man kann jedoch auch zunächst Rohlinge herstellen und diese spanabhebend bearbeiten und anschliessend polieren. Die erhältlichen halbharten bis weichen kontaktoptischen Materialien besitzen ein Wasseraufnahmevermögen von etwa 2 Gew.-%.

Die erfindungsgemässen halbharten bis weichen Kontaktlinsen- oder -schalen zeichnen sich durch ihren hohen Tragekomfort und durch ihre physiologische Indifferenz aus. Da sie nur in geringem Umfang Wasser aufnehmen, speichern sie weder Bakterien, Sporen oder Pilze noch Stoffwechselprodukte und Sterilisationsmittel. Sie enthalten keine niedermolekularen Zusatzmittel, die auswandern und das Auge schädigen könnten. Die Verwendung von Vulkanisationshilfsmitteln und Füllstoffen ist nicht notwendig. Hervorzuheben ist die gute Benetzbarkeit mit Tränenflüssigkeit und die geringe Neigung zur Ablagerung bzw. Aufnahme von Lipoiden.

Nachfolgend wird die Herstellung einiger für die erfindungsgemäss zu verwendenden Polymerlegierungen geeigneter Polyester(ether)carbonate beschrieben.

A) 1000 Gew.-Teile eines linearen Polyethers aus Ethylenglykoleinheiten mit einem mittleren Molekulargewicht Mn = 608 (bestimmt durch OH-Zahl-Messung), 334,8 Gew.-Teile Diphenylcarbonat und 0,1 Gew.-Teile Natriumphenolat werden 1 Stunde bei Temperaturen zwischen 160 bis 190°C gerührt. Anschliessend werden unter einem Vakuum von 1,5 Torr die entstehenden flüchtigen Polykondensationsprodukte, vor allem Phenol, abdestilliert. Unter fortgesetzter Destillation wird die Temperatur für 4 Stunden auf 190°C gesteigert. Man erhält dabei eine zähe, elastische Masse mit eines Grenzviskosität [η], gemessen in Tetrahydrofuran (THF) bei 25°C von 0,238 und einem Molekulargewicht von ~ 5000 g/Mol (bestimmt durch Dampfdruckosmose).

B) 1000 Gew.-Teile eines linearen Polyethylenglykols mit einem mittleren Molekulargewicht Mn = 608 und einer OH-Zahl von 184, 358 Gew.-Teile Diphenylcarbonat, 0,1 Gew.-Teile Natriumphenolat und 1,2 Gew.-Teile Dilauryldithiopropionat (Irganox® PS 800) werden wie unter Beispiel A) behandelt. Dabei entsteht eine kautschukartige, zähelastische Masse mit einer Grenzviskosität [η] von 0,642 [gemessen in Tetrahydrofuran (THF) bei 25°C].

C) 300 Gew.-Teile eines Polyesterdiols aus Adipinsäure und einer Mischung aus n-Hexan-1,6-diol/Neopentylglykol im Verhältnis 65 : 35 vom mittleren Molekulargewicht Mn = 2000 (bestimmt durch OH-Zahl-Messung), 700 Gew.-Teile eines linearen Polyethers mit einem mittleren Molekulargewicht Mn = 608 (bestimmt durch OH-Zahl-Messung), 286,4 Gew.-Teile Diphenylcarbonat, 0,1 Gew.-Teile Natriumphenolat und 1,2 Gew.-Teile Irganox® PS 800 werden 1 Stunde bei 185°C gerührt und anschliessend werden binnen 5 Stunden unter einem Vakuum von 1,5 Torr bei 185°C unter Rühren die flüchtigen Kondensationsprodukte, vor allem Phenol, abdestilliert. Das Produkt ist ein hochelastischer Kautschuk mit einer Grenzviskosität [η] von 2,21 (gemessen in THF bei 25°C).

D) 1000 Gew.-Teile eines Polyesterdiols aus Adipinsäure und einer Mischung aus n-Hexan-1,6-diol/Neopentylglykol im Verhältnis 65 : 35 vom mittleren Molekulargewicht Mn = 2000, 170 Gew.-Teile Diphenylcarbonat, 0,1 Gew.-Teile Natriumphenolat und 1,2 Gew.-Teile Irganox® PS 800 werden wie die Reaktionskomponenten in Beispiel C) behandelt. Nach der Reaktion wird ein Carbonatgruppen enthaltender Polyester mit einem mittleren Molekulargewicht von Mn = 3600 und einer Grenzviskosität [η] von 0,192 erhalten, der endständige OH-Gruppen enthält.

E) 420,4 Gew.-Teile des Reaktionsproduktes aus Beispiel A) und 123,2 Gew.-Teile des Reaktionsproduktes aus Beispiel D) werden unter Rühren auf 140°C erwärmt. Anschliessend wird Vakuum von 0,1 Torr angelegt und unter Rühren und Erwärmen auf 185°C das entstehende Phenol abdestilliert. nach 4 Stunden Reaktionszeit erhält man einen Carbonatgruppen enthaltenden Polyetherester mit einem mittleren Molekulargewicht Mn = 9300 und einer Grenzviskosität [η] von 0,61, gemessen wie in Beispiel A).

F) 1000 Gew.-Teile eines Polyesterdiols aus Adipinsäure und einer Mischung aus N-Hexan-1,6-diol/Neopentylglykol im Gewichtsverhältnis 65 : 35 vom mittleren Molekulargewicht Mn = 2000 (bestimmt durch OH-Zahl-Messung), 115,1 Gew.-Teile Diphenylcarbonat und 0,1 Gew.-Teile Natriumphenolat werden bei 150°C unter Stickstoffatmosphäre 1 Stunde gerührt, anschliessend wird Vakuum angelegt und die Temperatur auf 185°C gesteigert. Dabei destillieren die flüchtigen Kondensationsprodukte, vor allem Phenol, ab, und das Vakuum kann mit fortlaufender Reaktion auf 0,4 Torr abgesenkt werden. Nach 5 Stunden Reaktionszeit wird mit Stickstoff belüftet. Das Produkt ist eine leicht gelbe kautschukelastische Masse mit einer Grenzviskosität [η] von 1,07 (gemessen in THF bei 25°C).

G) 500 Gew.-Teile eines Polyesterdiols aus Adipinsäure und einer Mischung aus Hexandiol-1,6/Neopentylglykol im Verhältnis 65 : 35 vom mittleren Molekulargewicht Mn = 2000, 500 Gew.-Teile eines linearen Polyethers aus Ethylenglykoleinheiten mit einem Molekulargewicht von 608, 238,6 Gew.-Teile Diphenylcarbonat, 0,1 Gew.-Teile Na-Phenolat und 1,2 Gew.-Teile Dilaurylthiodipropionat werden in einem Reaktionsgefäss mit Stickstoff überlagert, auf 180°C unter Rühren erwärmt, anschliessend wird 1 Stunde bei 180°C kondensiert und dann die flüchtigen Kondensationsprodukte im Vakuum abdestilliert, indem die Temperatur binnen 1 Stunde auf 190°C gesteigert wird. Das Produkt ist ein festes Wachs mit einer Grenzviskosität [η] von 0,861 (gemessen in THF bei 25°C).

H) 948,5 Gew.-Teile eines linearen Polyethers aus Ethylenglykoleinheiten mit einem mittleren Molekulargewicht Mn = 608, 351 Gew.-Teile Diphenylcarbonat und 0,1 Gew.-Teile Na-Phenolat werden 1 Stunde bei 160 bis 190°C gerührt. Anschliessend wird Vakuum von 1,5 Torr angelegt und das entstandene Phenol abdestilliert. Nach 4 Stunden Destillieren entweichen keine flüchtigen Kondensationsprodukte mehr. Das Reaktionsgefäss wird nun mit Stickstoff belüftet und 160 g eines Polyesterdiols aus Adipinsäure und einer Mischung aus Hexandiol-(1,6)/Neopentylglykol im Verhältnis 65 : 35 vom mittleren Molekulargewicht Mn = 2000 werden dem Ansatz zugegeben. Es wird wieder evakuiert und im Verlauf von 3 Stunden bei 190°C das Phenol abdestilliert. Das Produkt ist ein sehr hochviskoses Öl mit einer Grenzviskosität [η] von 0,54 (gemessen in THF bei 25°C).

I) 6716 Gew.-Teile eines Polyesterdiols aus Adipinsäure und einer Mischung aus Hexandiol-1,6/Neopentylglykol im Gewichtsverhältnis 65 : 35 vom mittleren Molekulargewicht Mn = 2000, 720 Gew.-Teile Diphenylcarbonat und 0,24 Gew.-Teile Natriumphenolat werden in einem mit Stickstoff gefüllten und mit einer Destillationsbrücke versehenen Rührkessel unter Rühren auf 130°C erwärmt. Dann wird der Innendruck des Reaktors abgesenkt, wobei Phenol abdestilliert. Nach 1 Stunde ist ein Druck von 1 mbar erreicht und man erhöht die Temperatur. Nun wird 1 Stunde bei 150°C, 3,5 Stunden bei 175°C und dann 2 Stunden bei 180°C im Vakuum gerührt. Man erhält einen kautschukartigen Kunststoff mit einer Grenzviskosität [η] = 0,99 $\frac{dl}{g}$, gemessen in THF bei 25°C.

Weitere für die erfindungsgemässe Herstellung von Polymerlegierungen geeignete höhermolekulare, Ester- bzw. Carbonatgruppen aufweisende Verbindungen sind:

K) ein durch Kondensation von Adipinsäure und 1,4-Butandiol hergestellter Polyester der Molmasse (Mn) 11 500;

L) ein durch Kondensation von 1,6-Hexandiol und Diphenylcarbonat hergestelltes Polycarbonat der Molmasse (Mn) 10 700.

*Herstellung der Kontaktlinsen-Materialien*

Verwendet wurde ein Celluloseacetobutyrat (CAB) der Zusammensetzung:

37 Gew.-% Butyryl-Gruppen,
15 Gew.-% Acetyl-Gruppen,
0,8 Gew.-% Hydroxyl-Gruppen,

sowie ein Celluloseacetopropionat (CAP) der Zusammensetzung:

49 Gew.-% Propionyl-Gruppen,
2 Gew.-% Acetyl-Gruppen,
1,6 Gew.-% Hydroxyl-Gruppen.

Die höhermolekularen Verbindungen F), G), I), K) und L) wurden in den in Tabelle 1 angegebenen Verhältnissen mit CAB und CAP in einem Doppelwellenextruder bei einer Zylindertemperatur von 160 bis 170°C gemischt und granuliert.

Die so hergestellten Granulatkörner wurden zwischen Quarzstempeln nach einem Schmelz/Pressverfahren bei 180°C und 1 h Presszeit zu Kontaktschalen gepresst. Die Kontaktschalen waren voll ausgebildet und liessen sich leicht vom Quarzglaswerkzeug lösen. Beim Überführen der Linsen in den hydratisierten Zustand wurde eine leichte Versteilung der Krümmung festgestellt, die sich jedoch nicht mehr veränderte. Die Messung der Innenradien im hydratisierten Zustand über 14 Tage hinweg ergab Schwankungen von kleiner als 0,02 mm. Die Prüfung der Linsen an der Spaltlampe zeigte ein ausgezeichnetes optisches Bild. Schlieren oder Trübungen waren nicht erkennbar, die Lichtdurchlässigkeit betrug ≥ 97%. Gegenüber handelsüblichen Linsen aus einem Celluloseacetobutyrat/Polyethylen-co-vinylacetat-Blend zeigten die Materialien eine merklich geringere Lichtstreuung. Die Prüfung auf dem Karnickelauge bewies die gute Verträglichkeit. Nach 30 Tagen ununterbrochenem Tragen wurde keine Hornhautgefässeinsprossung beobachtet (Vascularisation).

Tabelle 1

| Beispiel | Gew.-Teile Polyhydroxylverbindung | Gew.-Teile CAB | Gew.-Teile CAP |
|---|---|---|---|
| 1 | F 10 | 90 | — |
| 2 | G 15 | 85 | — |
| 3 | I 8 | 92 | — |
| 4 | F 10 | — | 90 |
| 5 | K 5 | 95 | — |
| 6 | L 10 | 90 | — |

**Patentansprüche**

1. Kontaktlinsen und Kontaktschalen aus einer im wesentlichen von niedermolekularen Weichmachern freien Polymerlegierung auf Basis eines oder mehrerer Celluloseester von einer oder mehreren aliphatischen Carbonsäuren, dadurch gekennzeichnet, dass die Polymerlegierung aus

A) 97-70 Gew.-% Celluloseester und

B) 3-30 Gew.-% einer in der Polymerkette Ester- und/oder Carbonatgruppen aufweisenden aliphatischen Verbindung mit einem Molekulargewicht von 2000 bis 300 000

besteht und weniger als 2 Gew.-% an Verbindungen mit einem Molekulargewicht unter 500 enthält.

2. Kontaktlinsen und Kontaktschalen nach Anspruch 1, dadurch gekennzeichnet, dass die Polymerlegierung aus

A) 95-85 Gew.-% Celluloseester und

B) 5-15 Gew.-% der aliphatischen Verbindung

besteht

3. Kontaktlinsen und Kontaktschalen nach Anspruch 1 oder 2, dadurch gekennzeichnet, dass die Polymerlegierung weniger als 1 Gew.-%, vorzugsweise weniger als 0,5 Gew.-% an Verbindungen mit einem Molekulargewicht unter 500 enthält.

4. Kontaktlinsen und Kontaktschalen nach Anspruch 1 oder 2, dadurch gekennzeichnet, dass die Polymerlegierung weniger als 1 Gew.-%, vorzugsweise weniger als 0,5 Gew.-%, an Verbindungen mit einem Molekulargewicht unter 1000 enthält.

5. Kontaktlinsen und Kontaktschalen nach Ansprüchen 1 bis 4, dadurch gekennzeichnet, dass Komponente A) der Polymerlegierung ein Celluloseacetobutyrat, enthaltend

30 bis 50 Gew.-%, vorzugsweise 35 bis 46 Gew.-% Buttersäure,

10 bis 26 Gew.-%, vorzugsweise 15 bis 21 Gew.-% Essigsäure und

0,7 bis 1,45 Gew.-%, vorzugsweise 1,2 bis 1,7 Gew.-% Hydroxylgruppen

oder ein Celluloseacetopropionat, enthaltend

30 bis 63,5 Gew.-%, vorzugsweise 40 bis 60 Gew.-% Propionsäure,

1 bis 12 Gew.-%, vorzugsweise 2 bis 8 Gew.-% Essigsäure und

1,2 bis 1,45 Gew.-%, vorzugsweise 1,5 bis 1,8 Gew.-% Hydroxylgruppen

ist.

6. Kontaktlinsen und Kontaktschalen nach Ansprüchen 1 bis 5, dadurch gekennzeichnet, dass Komponente B) der Polymerlegierung ein Molekulargewicht von 4000 bis 200 000 aufweist.

7. Kontaktlinsen und Kontaktschalen nach Ansprüchen 1 bis 6, dadurch gekennzeichnet, dass Komponente B) der Polymerlegierung ein Polyester, Polycarbonat oder Polyetherester ist.

8. Kontaktlinsen und Kontaktschalen nach Anspruch 7, dadurch gekennzeichnet, dass die Polyesterkomponente aus Adipinsäure bzw. Kohlensäure und 1,4-Butandiol und/oder 1,6-Hexandiol und/oder Neopentylglykol und die Polyetherkomponente aus Ethylenoxid und/oder Propylenoxid aufgebaut ist.

9. Kontaktlinsen und Kontaktschalen nach Ansprüchen 1 bis 6, dadurch gekennzeichnet, dass Komponente B) der Polymerlegierung ein Polyester-(ether)carbonat mit wiederkehrenden Struktureinheiten der allgmeinen Formel

$$\left[\left(X\text{-}O\text{-}\underset{\underset{O}{\|}}{C}\text{-}O\right)_l\left(X^1\text{-}O\text{-}\underset{\underset{O}{\|}}{C}\text{-}O\right)_n\right]_m \qquad (I)$$

ist, in der

$X^1$ gleiche oder verschiedene aliphatische Polyesterreste mit einem Molekulargewicht von 200 bis 6000, vorzugsweise von 750 bis 3500, bedeutet,

X die Bedeutung von $X^1$ hat oder für gleiche oder verschiedene aliphatische Polyetherreste mit einem Molekulargewicht von 200 bis 20 000, vorzugsweise von 700 bis 10 000, steht,

n = 0 oder eine ganze Zahl von 1 bis 20, vorzugsweise 10 bis 20, ist,

l eine ganze Zahl von 1 bis 20, vorzugsweise von 10 bis 20, darstellt und

m eine ganze Zahl, vorzugsweise ≧ 20, bedeutet,

wobei die Grenzviskosität der Komponente B) in Tetrahydrofuran vorzugsweise 0,5 - 2,5 dl/g beträgt.

**Claims**

1. Contact lenses and contact shells made from a polymer alloy which is essentially free from low molecular weight plasticisers and is based on one or more cellulose esters of one or more aliphatic carboxylic acids, characterised in that the polymer alloy consists of

A) 97-70% by weight of cellulose ester and

B) 3-30% by weight of an aliphatic compound with ester and/or carbonate groups in the polymer chain and with a molecular weight of 2,000 to 300,000, and

contains less than 2% by weight of compounds with a molecular weight below 500.

2. Contact lenses and contact shells according to claim 1, characterised in that the polymer alloy consists of

A) 95-85% by weight of cellulose ester and

B) 5-15% by weight of the aliphatic compound.

3. Contact lenses and contact shells according to claim 1 or 2, characterised in that the polymer alloy contains less than 1% by weight, preferably less than 0.5% by weight, of compounds with a molecular weight below 500.

4. Contact lenses and contact shells according to claim 1 or 2, characterised in that the polymer alloy contains less than 1% by weight, preferably less than 0,5% by weight, of compounds with a molecular weight below 1,000.

5. Contact lenses and contact shells according to claims 1 to 4, characterised in that component A) of the polymer alloy is a cellulose acetobutyrate containing

30 to 50% by weight, preferably 35 to 46% by weight, of butyric acid,

10 to 26% by weight, preferably 15 to 21% by weight, of acetic acid and

0.7 to 1.45% by weight, preferably 1.2 to 1,7% by weight, of hydroxyl groups,

or a cellulose acetopropionate containing

30 to 63.5% by weight, preferably 40 to 60% by weight, of propionic acid,

1 to 12% by weight, preferably 2 to 8% by weight, of acetic acid and

1.2 to 1.45% by weight, preferably 1.5 to 1.8% by weight, of hydroxyl groups.

6. Contact lenses and contact shells according to claims 1 to 5, characterised in that component B) of the polymer alloy has a molecular weight of 4,000 to 200,000.

7. Contact lenses and contact shells according to claims 1 to 6, characterised in that component B) of the polymer alloy is a polyester, polycarbonate or polyether-ester.

8. Contact lenses and contact shells according to claim 7, characterised in that the polyester component is built up from adipic acid or carbonic acid and butane-1,4-diol and/or hexane-1,6-diol and/or neopentenylglycol and the polyether component is built up from ethylene oxide and/or propylene oxide.

9. Contact lenses and contact shells according to claims 1 to 6, characterised in that component B) of the polymer alloy is a polyester(ether)-carbonate with recurring structural units of the general formula

$$\left[\left(X\text{-}O\text{-}\underset{\underset{O}{\|}}{C}\text{-}O\right)_l\left(X^1\text{-}O\text{-}\underset{\underset{O}{\|}}{C}\text{-}O\right)_n\right]_m \qquad (I)$$

in which

$X^1$ denotes identical or different aliphatic polyester radicals with a molecular weight of 200 to 6,000, preferably 750 to 3,500,

X has the meaning of $X^1$ or represents identical or different aliphatic polyether radicals with a molecular weight of 200 to 20,000, preferably 700 to 10,000,

n = 0 or is an integer from 1 to 20, preferably 10 to 20,

l represents an integer from 1 to 20, preferably 10 to 20 and

m denotes an integer, preferably ≧ 20,

the limiting viscosity of component B) in tetrahydrofuran preferably being 0.5 - 2.5 dl/g.

**Revendications**

1. Verres de contact scléraux et lentilles en une composition de polymères pratiquement exempte de plastifiants de faible poids moléculaire, composition à base d'un ou plusieurs esters cellulosiques d'un ou plusieurs acides carboxyliques aliphatiques, ces lentilles et verres de contact étant caractérisés en ce que la composition de polymères se compose de

A) 97-70% en poids d'ester cellulosique, et

B) 3-30% en poids d'un composé aliphatique dont la chaîne de polymère présente des groupes

ester et/ou carbonate et dont le poids moléculaire est de 2.000 à 300.000,
et ladite composition contient moins de 2% en poids de composés de poids moléculaire inférieur à 500.

2. Verres de contact scléraux et lentilles selon la revendication 1, caractérisés en ce que la composition de polymères se compose de

A) 95-85% en poids d'ester cellulosique, et

B) 5-15% en poids de composé aliphatique.

3. Verres de contact scléraux et lentilles selon la revendication 1 ou la revendication 2, caractérisés en ce que la composition de polymères contient moins de 1% en poids, de préférence moins de 0,5% en poids de composés de poids moléculaire inférieur à 500.

4. Verres de contact scléraux et lentilles selon la revendication 1 ou la revendication 2, caractérisés en ce que la composition de polymères contient moins de 1% en poids, de préférence moins de 0,5% en poids de composés de poids moléculaire inférieur à 1.000.

5. Verres de contact scléraux et lentilles selon les revendications 1 à 4, caractérisés en ce que le composant A) de la composition de polymères est un acétobutyrate de cellulose contenant
30 à 50% en poids, de préférence 35 à 46% en poids d'acide butyrique
10 à 26% en poids, de préférence 15 à 21% en poids d'acide acétique et
0,7 à 1,45% en poids, de préférence 1,2 à 1,7% en poids de groupe hydroxyle,
ou un acétopropionate de cellulose contenant
30 à 63,5% en poids, de préférence 40 à 60% en poids d'acide propionique
1 à 12% en poids, de préférence 2 à 8% en poids d'acide acétique
1,2 à 1,45% en poids, de préférence 1,5 à 1,8% en poids de groupe hydroxyle.

6. Verres de contact scléraux et lentilles selon les revendications 1 à 5, caractérisés en ce que le composant B) de la composition de polymères a un poids moléculaire de 4.000 à 200.000.

7. Verres de contact scléraux et lentilles selon les revendications 1 à 6, caractérisés en ce que le composant B) de la composition de polymères est un polyester, un polycarbonate ou un polyétherester.

8. Verres de contact scléraux et lentilles selon la revendication 8, caractérisés en ce que le composant polyester est constitué à partir d'acide adipique ou d'acide carbonique et de 1,4-butanediol et/ou de 1,6-hexanediol et/ou de néopentylglycol et le composant polyéther est constitué à partir d'oxyde d'éthylène et/ou d'oxyde de propylène.

9. Verres de contact scléraux et lentilles selon les revendications 1 à 6, caractérisés en ce que le composant B) de la composition de polymères est un polyester (éther) carbonate comportant des unités structurales récurrentes de formule générale

$$-\left[\left(X-O-\underset{\underset{O}{\|}}{C}-O\right)_l\left(X^1-O-\underset{\underset{O}{\|}}{C}-O\right)_n\right]_m- \qquad (I)$$

dans laquelle

$X^1$ représente des radicaux polyester aliphatiques identiques ou différents de poids moléculaire 200 à 6.000, de préférence 750 à 3.500

X a la signification de $X^1$ ou représente des radicaux polyéther aliphatiques identiques ou différents de poids moléculaires 200 à 20.000, de préférence 700 à 10.000

n = 0 ou un nombre entier de 1 à 20, de préférence 10 à 20,

l représente un nombre entier de 1 à 20, de préférence 10 à 20, et

m représente un nombre entier de préférence ≥ 20,

la viscosité limite du composant B) dans le tétrahydrofurane étant de préférence de 0,5 à 2,5 dl/g.